# FASCICULE DE BREVET EUROPEEN

(11) **EP 4 049 107 B1**
(45) Date de publication et mention de la délivrance du brevet: **27.12.2023**
(21) Numéro de dépôt: 20803228.4
(22) Date de dépôt: 16.10.2020
(51) Int. Cl.: G05D 23/19, F16K 31/00, F01P 7/16, G05D 23/02, F16K 31/04, F16K 31/50

(54) **VANNE THERMOSTATIQUE**
THERMOSTATVENTIL
THERMOSTATIC VALVE

(30) Priorité: 24.10.2019 FR 1911894
(43) Date de publication de la demande: 31.08.2022
(73) Titulaire: NOVARES France, 78140 Vélizy-Villacoublay (FR)
(72) Inventeur: QUEVALLIER, Jean-Claude, 59810 LESQUIN (FR); WAYMEL, Gilles, 62410 HULLUCH (FR)
(74) Mandataire: Germain Maureau
(86) Numéro de dépôt international: PCT/FR2020/051875
(87) Numéro de publication internationale: WO 2021/079049

(56) Documents cités:
- EP-A1- 1 486 843
- EP-B1- 1 486 843
- FR-A1- 2 434 723
- US-B1- 6 742 716
- US-B1- 6 764 020
- US-B1- 9 903 258

## Description

La présente invention concerne le domaine des vannes thermostatiques. Une vanne thermostatique est typiquement utilisée dans le domaine de la régulation thermique automatique pour des circuits de fluide (gaz, eau, huile...).

De manière connue une vanne thermostatique comprend un corps creux fermé percé d'une première ouverture et d'une deuxième ouverture et comprenant un obturateur séparant les deux ouvertures de manière étanche. L'obturateur est sensible à la température du fluide de manière à s'ouvrir au-dessus d'une température seuil et à se refermer en dessous de ladite température seuil.

Une application illustrative dans le domaine automobile est la réalisation de boîtiers d'entrée d'eau (convergent) ou de boîtiers de sortie d'eau (divergent).

L'obturateur d'une vanne thermostatique comprend typiquement un actionneur thermostatique, telle une capsule à cire, et un clapet actionné par l'actionneur thermostatique. Une capsule à cire comprend un cylindre rempli d'une cire sensible à la température. La cire repousse une tige sous l'effet d'un important changement de volume accompagnant un changement de phase solide/liquide, se produisant à une température seuil. Un tel actionneur thermostatique commande automatiquement la course d'ouverture du clapet à partir d'une température seuil ou température de début d'ouverture. La fermeture du clapet est assurée par un moyen de rappel, tel un ressort, antagoniste de l'actionneur thermostatique. Le clapet présente avantageusement une section passante adaptée au passage du débit nominal (maximal) prévu pour la vanne thermostatique.

Bien que relativement puissants et d'un coût réduit, les thermostats à capsule à cire présentent un certain nombre d'inconvénients. L'un de leurs inconvénients majeurs est leur réactivité à une seule température seuil. Or, selon le mode d'utilisation du moteur, il est parfois intéressant de pouvoir ouvrir le clapet de la vanne thermostatique à une température inférieure à la température de changement d'état de la cire. Pour pallier cet inconvénient, il a été proposé dans l'art antérieur d'ajouter un réchauffeur électrique destiné à chauffer la cire. Ce type de réchauffeur électrique ne permet toutefois pas d'anticiper l'ouverture du thermostat en dessous de 20°C de la température seuil, ce qui n'est pas toujours suffisant pour assurer un fonctionnement optimal du moteur. Par ailleurs, le temps entre le moment où la cire est chauffée et le moment où le clapet s'ouvre est généralement long, ce qui peut poser problème, notamment dans le cas où une ouverture rapide du clapet est nécessaire.

Pour remédier aux problèmes précités des thermostats à capsules à cire, des systèmes de vannes électriques à boisseaux ont été développés afin de piloter en toutes conditions la circulation du fluide caloporteur. Ces vannes fonctionnent sur le principe d'un ou de plusieurs boisseaux permettant d'ouvrir ou de fermer des fenêtres radiales dédiées chacune à une branche de circulation. Ces vannes permettent ainsi de piloter le débit du fluide caloporteur en fonction de la température, mais aussi en fonction d'autres paramètres, tels que la charge appliquée au moteur, la température de l'air d'admission, ou celle de la culasse. Ces vannes nécessitent toutefois d'installer des capteurs de manière à contrôler les paramètres de fonctionnement et une unité de contrôle de manière à gérer le déplacement des boisseaux. Par ailleurs, pour assurer une bonne étanchéité entre le ou les boisseaux et chaque branche de circulation, une maîtrise géométrique et dimensionnelle rigoureuse est nécessaire. Ces vannes présentent donc un coût prohibitif qui les réserve à une utilisation haut de gamme. Par ailleurs, du fait de l'utilisation d'un actionneur électrique, ces vannes pilotées présentent un encombrement conséquent qui empêche leur implantation sur certains types de véhicules.

De telles vannes ont notamment été décrites dans les documents EP 1 486 843 A1, US 6 764 020 B1, US 6 742 716 B1, US 9 903 258 B1 et FR 2 434 723 A1.

L'invention vise donc à proposer une vanne thermostatique permettant de palier les inconvénients des thermostats à capsule à cire tout en étant d'un coût et d'un encombrement réduits.

A cet effet, selon un premier aspect, l'invention a pour objet une vanne thermostatique comprenant un corps creux, une première ouverture et une deuxième ouverture débouchant dans le corps et hydrauliquement reliées par une section passante et un obturateur disposé au moins partiellement dans la section passante et comprenant un actionneur thermostatique, un moyen de rappel, un clapet apte à ouvrir la première ouverture lorsque actionné par l'actionneur thermostatique et à fermer la première ouverture lorsque rappelé par le moyen de rappel, dans laquelle l'actionneur thermostatique comprend un cylindre contenant un matériau d'expansion dont le volume croît au-delà d'une température seuil et une tige définissant une direction axiale, un déplacement relatif entre le cylindre et la tige le long de la direction axiale pouvant se produire sous l'action du matériau d'expansion, et dans laquelle la tige est en appui à l'une de ses extrémités contre un élément de butée, ledit élément de butée étant déplaçable sous l'action de moyens de déplacement en direction du cylindre, lesdits moyens de déplacement étant au moins en partie disposés à l'intérieur de la section passante, caractérisée en ce qu'elle comprend des moyens d'étanchéité aptes à empêcher une circulation de fluide entre la section passante et un compartiment externe logeant en partie les moyens de déplacement, lesdits moyens d'étanchéité étant constitués d'un joint torique disposé autour d'un élément de liaison disposé entre la section passante et le compartiment externe et soumis à un mouvement de rotation autour d'un axe parallèle à la direction axiale sous l'action des moyens de déplacement.

Ainsi configurée, l'invention permet donc d'ouvrir et de fermer le clapet, indépendamment de la température du fluide circulant dans la vanne. Par ailleurs, du fait du positionnement partiel des moyens de déplacement dans la section passante, la vanne présente un encombrement sensiblement équivalent à celui d'une vanne thermostatique conventionnelle, équipée d'un actionneur thermostatique de type capsule à cire par exemple. En outre, la vanne de l'invention permet d'assurer une meilleure étanchéité entre la section passante et le compartiment externe du fait que le joint torique est soumis à un mouvement de rotation et non à un mouvement de translation.

Selon d'autres caractéristiques, la vanne thermostatique de l'invention comporte une ou plusieurs des caractéristiques optionnelles suivantes considérées seules ou selon toutes les combinaisons possibles :
- les moyens de déplacement sont aptes à déplacer l'élément de butée le long de la direction axiale définie par la tige.
- l'élément de butée comprend une bague cylindrique creuse possédant au moins une rainure sur son pourtour externe, ladite rainure définissant une partie filetée, et un moyeu central relié à ladite bague au moyen d'ailettes radiales, ledit moyeu central étant aligné avec la tige et en contact avec celle-ci, et en ce que les moyens de déplacement comprennent un actionneur électrique apte à déplacer en rotation le moyeu central autour d'un axe parallèle à la direction axiale et au moins une saillie en relief formée sur le pourtour interne du corps, ladite saillie définissant une partie taraudée dans laquelle vient se visser la partie filetée de la bague de telle sorte que le déplacement en rotation du moyeu central provoque le déplacement le long de la direction axiale de l'élément de butée.
- l'élément de butée comprend une bague cylindrique creuse et un moyeu central relié à ladite bague au moyen d'ailettes radiales, ledit moyeu central étant aligné avec la tige et en contact avec celle-ci, et en ce que l'élément de butée est monté en glissière dans le corps, de telle sorte qu'il soit bloqué en rotation mais puisse se déplacer selon la direction axiale, ledit élément de butée étant vissé dans un élément de liaison ou, réciproquement, ledit élément de liaison venant se visser dans l'élément de butée, l'élément de liaison pouvant se déplacer en rotation autour d'un axe parallèle à la direction axiale sous l'action d'un actionneur électrique, le déplacement en rotation de l'élément de liaison assurant le déplacement axial de l'élément de butée.
- l'élément de butée comprend quatre ailettes radiales espacées angulairement les unes des autres.
- un alésage formé à l'une des extrémités du moyeu central est dimensionné pour recevoir une extrémité de la tige qui dépasse du cylindre.
- la température seuil est comprise entre 20 °C et 115 °C.
- le matériau d'expansion est de la cire.
- le moyen de rappel est un ressort de compression exerçant une poussée axiale contre une cage entourant au moins partiellement le cylindre de l'actionneur thermostatique et en appui contre le clapet, la cage se déplaçant le long de la direction axiale sous l'action combinée de la poussée exercée par le ressort de compression et de la poussée contraire exercée par le clapet lors de son déplacement.

Selon un autre aspect, l'invention a pour objet un boîtier d'entrée de fluide ou de sortie de fluide, pour régulation thermostatique d'un circuit de fluide, comprenant une telle vanne thermostatique.

Selon une configuration particulière de l'invention, le corps de la vanne est fixé sur un bâti du boîtier au moyen d'une liaison de type baïonnette.

L'invention sera davantage comprise à la lecture de la description non limitative qui va suivre, faite en référence aux figures ci-annexées.
[Fig. 1] est une vue en perspective d'un boîtier de sortie d'eau muni d'une vanne thermostatique selon un mode particulier de réalisation de l'invention,
[Fig. 2] est une vue en perspective éclatée du boîtier représenté sur la figure 1,
[Fig. 3] est une vue en coupe du boîtier telle que représenté sur la figure 2,
[Fig. 4] est une vue en coupe du boîtier telle que représenté sur la figure 1, le clapet étant en position fermé,
[Fig. 5] est une vue similaire à la figure 4, le clapet s'étant déplacé en position ouverte du fait du déplacement de la tige de l'actionneur thermostatique,
[Fig. 6] est une vue similaire à la figure 4, le clapet s'étant déplacé en position ouverture du fait du déplacement de l'élément de butée,
[Fig. 7] est une vue agrandie d'un premier détail de construction du boîtier tel que représenté sur la figure 4,
[Fig. 8] est une vue agrandie d'un deuxième détail de construction du boîtier tel que représenté sur la figure 4,
[Fig. 9] est une vue partielle en coupe de la vanne thermostatique représentée sur la figure 2,
[Fig. 10] est une vue en perspective montrant la liaison glissière entre l'élément de butée et l'élément de liaison du boîtier de la figure 1.

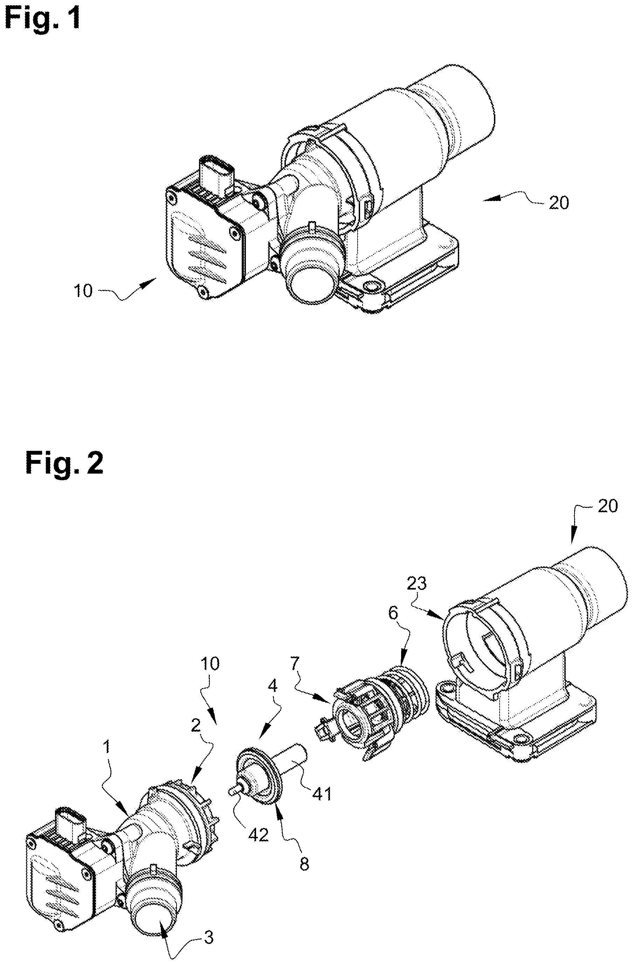

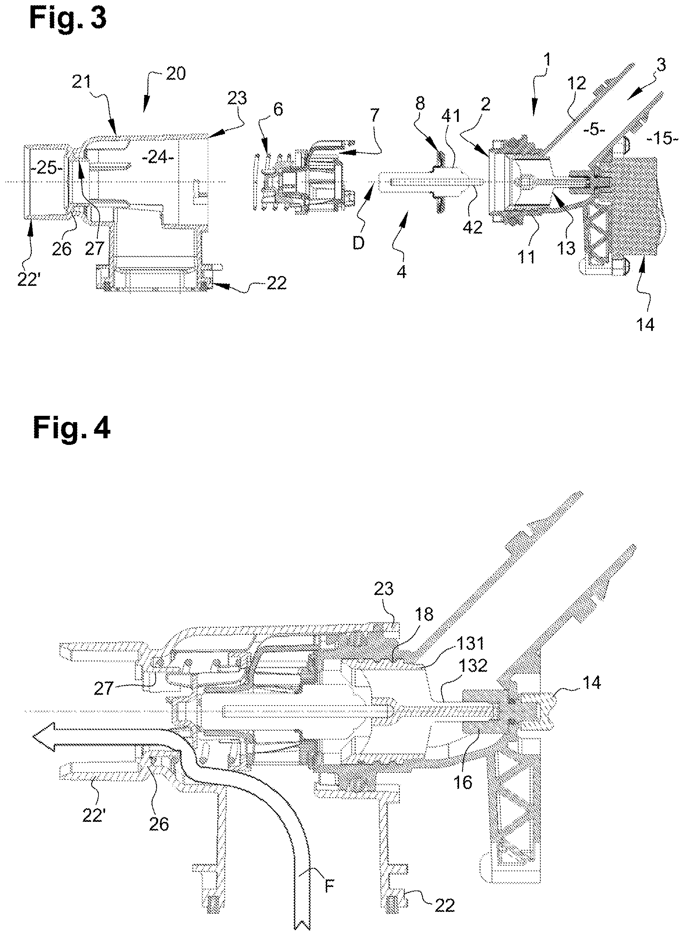

La figure 1 représente un boîtier 20 de sortie ou d'entrée de fluide de refroidissement, le fluide de refroidissement étant en général de l'eau glycolée. Dans le cas spécifique d'un boîtier de sortie de fluide, le boîtier 20 permet de gérer la circulation du fluide du moteur vers le radiateur. Ainsi, en fonction de la température du fluide de refroidissement, le boîtier 20 oriente ou pas le fluide de refroidissement vers le radiateur afin de maintenir la température optimale de fonctionnement du moteur. Le boîtier 20 possède une ou plusieurs entrées par lesquelles peut entrer le fluide et une ou plusieurs sorties par lesquelles peut sortir le fluide. Comme représenté sur les figures 2 et 3, le boîtier 20 possède en outre une ouverture circulaire 23 à sa périphérie, ladite ouverture 23 permettant à une vanne thermostatique 10 d'être partiellement introduite à l'intérieur du boîtier 20, puis fixée audit boîtier 20, par exemple au moyen d'une liaison du type baïonnette. En fonction de l'usage envisagé et du moteur équipant le véhicule, il sera ainsi possible de modifier le circuit du fluide de refroidissement à l'intérieur du boîtier 20 en modifiant simplement la vanne thermostatique 10. Le boîtier 20 pourra ainsi être utilisé pour des usages et des charges relativement différentes, lesquels nécessitent des contrôles spécifiques du débit de fluide de refroidissement. En particulier, la vanne thermostatique 10 pourra être déclinée en plusieurs versions : avec un thermostat classique (non pilotée), un thermostat avec réchauffeur (pilotée) ou avec un actionneur électrique.

Dans le mode particulier de réalisation représenté sur les figures 1 à 3, le boîtier 20 comprend un bâti 21. Le bâti 21 possède une cloison 26 séparant deux chambres 24, 25, respectivement une chambre 24 d'arrivée du fluide de refroidissement en provenance du moteur, le fluide entrant dans le boîtier 20 au travers d'une conduite d'entrée 22, et une chambre 25 de retour vers un collecteur de fluide de refroidissement, le fluide sortant du boîtier 20 par une conduite de sortie 22'. La cloison 26 présente une ouverture prolongée par un conduit 27 permettant de faire communiquer les deux chambres 24, 25.

Le boîtier 20 intègre en outre une vanne thermostatique 10. La vanne 10 comprend un corps 1 possédant une première partie 11 sensiblement cylindrique qui est alignée avec l'ouverture 23 et qui est fixée à celle-ci, notamment par une liaison de type baïonnette, et une deuxième partie 12 sensiblement cylindrique qui est disposée de manière oblique par rapport à la première partie. Le corps 1 forme une cavité fermée à l'exclusion d'une première ouverture 2, définie par la première partie 11, et d'une deuxième ouverture 3, définie par la deuxième partie 12, qui débouchent dans le corps 1 et permettent une entrée et/ou une sortie de fluide. Dans le cas d'un boîtier de sortie de fluide, la deuxième ouverture 3 pourra par exemple permettre une sortie de fluide de refroidissement en direction d'un radiateur de manière à refroidir le fluide. La première ouverture 2 et la deuxième ouverture 3 sont reliées par une section passante 5. La vanne 10 comprend en outre un obturateur disposé au moins partiellement dans la section passante de manière à séparer sélectivement la première ouverture 2 de la deuxième ouverture 3. Ledit obturateur est configuré pour être fermé en dessous d'une température seuil et ainsi séparer de manière étanche la première ouverture 2 de la deuxième ouverture 3 en fermant la section passante 5, et être ouvert au-dessus de la température seuil de manière à mettre en relation fluidique la première ouverture 2 de la deuxième ouverture 3, avec la section passante 5 pleinement ouverte et apte à laisser passer un débit nominal/maximal.

Pour cela, l'obturateur comprend un actionneur thermostatique 4, un moyen de rappel 6 et un clapet 8. Le clapet 8 est apte à s'ouvrir lorsqu'actionné par l'actionneur thermostatique 4 et à se fermer lorsque rappelé par le moyen de rappel 6. L'actionneur thermostatique 4 comprend typiquement deux points d'actionnement et est apte à faire varier la distance et/ou l'effort présent entre ces deux points d'actionnement. Un premier point d'actionnement est solidaire du corps 1 et un deuxième point d'actionnement est solidaire du clapet 8.

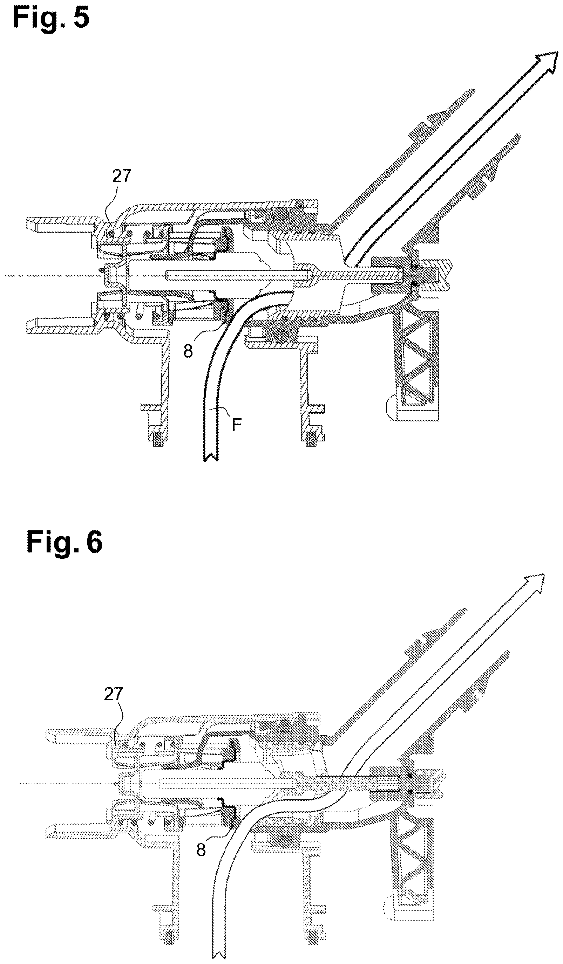

L'actionneur thermostatique 4 comprend notamment un cylindre 41 et une tige 42 engagée dans le cylindre 41 selon son axe et apte à sortir du cylindre 41, ladite tige 42 étant alignée dans la direction D. Le clapet 8 de forme sensiblement annulaire entoure la périphérie du cylindre 41 et est solidaire de celui-ci. Tel qu'illustré aux figures 4 et 5, la tige 42 de l'actionneur thermostatique 4 est fixe relativement au corps 1 de la vanne thermostatique 10 et le cylindre 41 de l'actionneur thermostatique 4 est mobile par rapport à la tige 42 et déplace le clapet 8 dont il est solidaire. Ce déplacement relatif entre le cylindre 41 et la tige 42 résulte du changement d'état d'un matériau d'expansion contenu dans le cylindre 41 et contre lequel appuie l'une des extrémités de la tige 42. Ce matériau d'expansion présente notamment une température seuil au-delà de laquelle il passe de l'état solide à l'état liquide et augmente de volume. Cette augmentation de volume génère donc un effort de poussée contre la tige 42, lequel aboutit au déplacement du cylindre 41 du fait de l'immobilité de la tige 42. Dans le cas d'un actionneur thermostatique du type capsule à cire, le matériau d'expansion contenue dans le cylindre 41 est de la cire et la température seuil est généralement comprise entre 80°C et 115°C. Dans le cas d'autres actionneurs thermostatiques, la température seuil peut être inférieure à 80°C. Ainsi, pour des thermostats équipant des échangeurs air/eau, cette température seuil est comprise entre 50°C et 70°C. Elle peut également être comprise entre 20°C et 50°C pour des thermostats utilisés dans des circuits de refroidissement de batteries.

Ainsi, comme représenté sur la figure 4, lorsque la température du fluide de refroidissement est inférieure à la température seuil du matériau d'expansion, le clapet 8 obture l'ouverture 2 du corps 1, empêchant ainsi toute sortie de fluide par l'ouverture 3. Le fluide de refroidissement F circule donc uniquement entre les chambres 24 et 25 du boîtier 20 au travers du conduit 27.

Comme représenté sur la figure 5, lorsque la température du fluide de refroidissement est supérieure à la température seuil du matériau d'expansion, le cylindre 41 se déplace en direction du conduit 27, ce qui a pour effet d'éloigner le clapet 8 de l'ouverture 2 du corps 1, permettant ainsi une circulation du fluide de refroidissement F au travers de l'ouverture 2, puis dans la section passante 5 et finalement au travers de l'ouverture 3.

Le passage inverse de la position représentée sur la figure 5 à celle représentée sur la figure 4 se produit lors de la baisse progressive de la température du fluide de refroidissement et sous l'impulsion du moyen de rappel 6. Dans le mode de réalisation représenté, le moyen de rappel 6 est un ressort de compression qui est disposé entre la cloison 26 du bâti 21 et une pièce intermédiaire 7 définissant une cage qui entoure au moins partiellement le cylindre 41 de l'actionneur thermostatique 4 et qui est en appui contre le clapet 8. Le moyen de rappel 6 exerce donc, via la cage 7, une poussée axiale contre le clapet 8 qui est antagoniste à la poussée axiale exercée par l'actionneur thermostatique 4. Ainsi, l'actionneur thermostatique 4 assure l'ouverture du clapet 8 et le moyen de rappel 6 assure la fermeture du clapet 8 en plaquant ledit clapet 8 contre son siège. Ainsi en fonction de la température, l'actionneur thermostatique 4 s'étend, ouvre le clapet 8 et s'oppose au moyen de rappel 6 en le comprimant lorsque la température dépasse la température seuil, tandis que le moyen de rappel 6 reprend le dessus, repousse et ferme le clapet 8 et réduit l'action de l'actionneurthermostatique 4 lorsque la température repasse en-dessous de la température seuil.

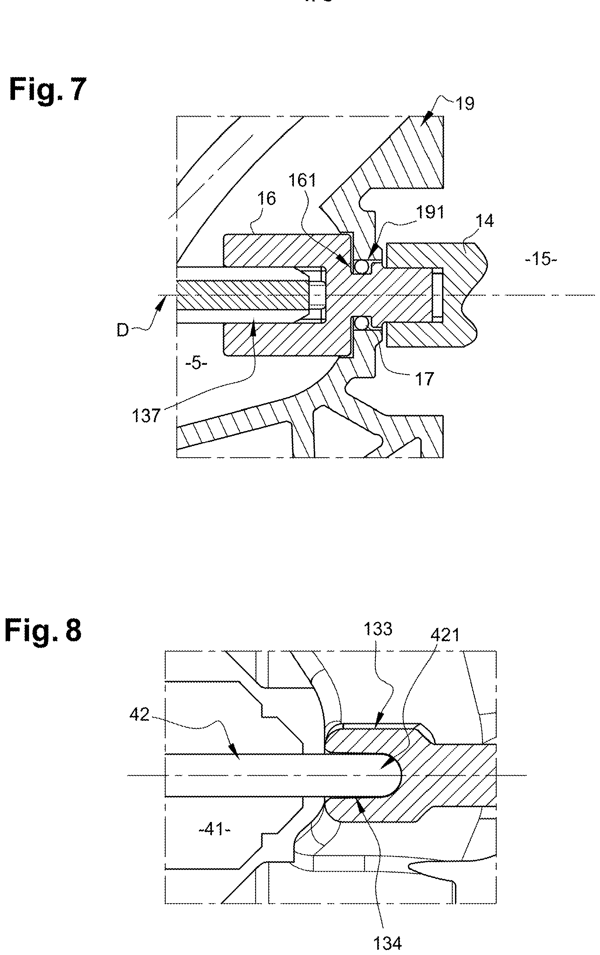

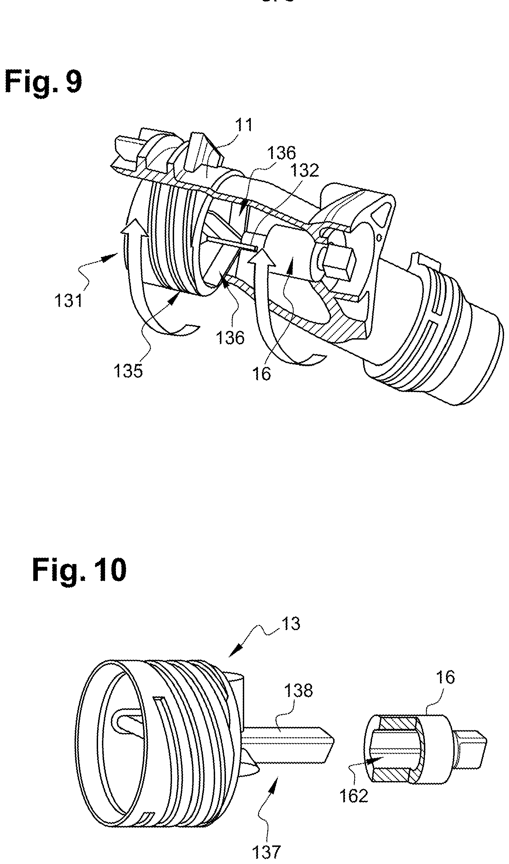

Afin d'assurer une ouverture du clapet 8 pour des températures de fluide inférieures à la température seuil du matériau d'expansion de l'actionneur thermostatique, la vanne 10 possède avantageusement des moyens de déplacement permettant de déplacer le premier point d'actionnement de l'actionneur thermostatique 4. Dans le mode de réalisation représenté, le premier point d'actionnement est défini par un élément de butée 13 contre lequel vient buter l'une des extrémités de la tige 42 de l'actionneur thermostatique. Comme illustré en détail sur les figures 4 et 9, cet élément de butée 13 comprend une bague 131 cylindrique creuse possédant une rainure 135 hélicoïdale sur son pourtour externe, ladite rainure 135 définissant une partie filetée, et un moyeu central 132 relié à ladite bague 131 au moyen de plusieurs ailettes radiales 136, par exemple quatre ailettes radiales 136 espacées angulairement les unes des autres. Le moyeu central 132 est aligné avec la tige 42 et en contact avec celle-ci au niveau de son extrémité 133 qui fait face au cylindre 41. Comme illustré sur la figure 8, l'extrémité 133 du moyeu central 132 possède notamment un alésage axial 134 qui est dimensionné pour recevoir l'extrémité 421 de la tige 42 qui dépasse du cylindre 41, la forme de l'alésage 134 étant avantageusement complémentaire de celle de la tige 42. Comme illustré sur la figure 7, l'autre extrémité 137 du moyeu central 132 est reliée à un élément de liaison 16 disposé à cheval entre la section passante 5 et un compartiment externe 15 logeant un actionneur électrique 14. Comme illustré sur la figure 10, l'extrémité 137 du moyeu central 132 pourra par exemple être reliée à l'élément de liaison 16 par une liaison glissière, la liaison glissière résultant de la présence de cannelures 138 le long de l'extrémité 137 destinées à coulisser à l'intérieur d'une cavité 162 de l'élément de liaison 16, ladite cavité 162 possédant une forme complémentaire de celle de l'extrémité 137. Ainsi, l'élément de de liaison 16 peut transmettre un couple de rotation au moyeu central 132, les deux pièces étant libres en translation. L'actionneur électrique 14 est apte à transmettre un mouvement de rotation à l'élément de liaison 16 autour de l'axe D de telle sorte que l'élément de liaison 16 est apte à transmettre un couple au moyeu central 132. De manière à éviter toute entrée de fluide dans le compartiment externe 15, un joint torique 17 est disposé autour de l'élément de liaison 16, au niveau d'une rainure annulaire 161 formée à la périphérie dudit élément de liaison 16, de telle sorte que le joint torique 17 soit positionné à l'intérieur d'une ouverture 191 formée dans une paroi 19 séparant la section passante 5 du compartiment externe 15.

Le mouvement de rotation du moyeu central 132 se transmet à la bague 131 via les ailettes radiales 136. Comme représenté sur les figures 4 et 9, la bague 131 est disposée dans la cavité formée par la première partie 11 du corps 1 de telle manière à venir en contact avec le pourtour interne de celle-ci. Etant donné que ce pourtour interne est pourvu d'une saillie en relief 18 en forme d'hélice, ladite saillie 18 formant une partie taraudée dans laquelle vient se visser la partie filetée de la bague 131, il se produit, lors de la rotation de la bague 131, un déplacement concomitant en translation le long de la direction axiale D de l'élément de butée 13. Ce déplacement en translation permet notamment de repousser la tige 42 en direction du cylindre 41 lorsque l'élément de butée 13 s'éloigne de l'élément de liaison 16. Dans le cas où la température du fluide est inférieure à la température seuil du matériau d'expansion, le matériau d'expansion contenu dans le cylindre 41 est dans un état solide. Le déplacement en translation de la tige 42 se transmet donc directement au cylindre 41.

Comme illustré sur la figure 6, le cylindre 41 peut donc se déplacer en direction du conduit 27 sous l'action de l'élément de butée 13, ce qui a pour effet d'éloigner le clapet 8 de l'ouverture 2 du corps 1, permettant ainsi une circulation du fluide de refroidissement F au travers de l'ouverture 2, puis dans la section passante 5 et finalement au travers de l'ouverture 3.

Le passage inverse de la position représentée sur la figure 6 à celle représentée sur la figure 4 se produit lors de l'inversion du sens de rotation de l'actionneur électrique 14. Ce mouvement de rotation dans l'autre sens provoque en effet un déplacement en translation de l'élément de butée 13 en direction de l'élément de liaison 16 du fait de l'interaction entre la partie filetée de la bague 131 et de la partie taraudée du corps 1. L'actionneur thermostatique 4, qui est solidaire du clapet 8, est alors repoussé, sous l'action du moyen de rappel 6 et via la cage 7, en direction de l'élément de liaison 16 jusqu'à ce que le clapet 8 vienne en appui contre son siège, fermant ainsi l'ouverture 2 du corps 1.

Bien entendu, l'invention n'est nullement limitée au mode de réalisation décrit ci-dessus et illustré par les différentes figures, ce mode de réalisation n'ayant été donné qu'à titre d'exemple. Des modifications restent possibles, notamment du point de vue de la constitution des divers éléments ou par la substitution d'équivalents techniques, sans pour autant sortir du domaine de l'invention.

En particulier, le boîtier 20 pourra également être un collecteur d'entrée d'eau d'un circuit de refroidissement d'un moteur.

Par ailleurs, dans une autre variante de réalisation de l'invention (non représentée), l'élément de butée 13 pourra être monté en glissière dans le corps 1, de telle sorte qu'il soit bloqué en rotation mais puisse se déplacer selon la direction axiale D. Il sera vissé dans l'élément de liaison 16, ou, réciproquement, ledit élément de liaison 16 venant se visser dans l'élément de butée 13, le vissage/dévissage de l'élément de butée 13, respectivement de l'élément de liaison 16, assurant le déplacement axial de l'élément de butée 13.

Cette variante pourrait être réalisée par exemple en surmoulant un insert métallique ou une tige filetée métallique.

## Revendications

1. Vanne thermostatique (10) comprenant un corps (1) creux, une première ouverture (2) et une deuxième ouverture (3) débouchant dans le corps (1) et étant hydrauliquement reliées par une section passante (5), et un obturateur disposé au moins partiellement dans la section passante (5) et comprenant un actionneur thermostatique (4), un moyen de rappel (6), un clapet (8) apte à ouvrir la première ouverture (2) lorsque actionné par l'actionneur thermostatique (4) et à fermer la première ouverture (2) lorsque rappelé par le moyen de rappel (6), dans laquelle l'actionneur thermostatique (4) comprend un cylindre (41) contenant un matériau d'expansion dont le volume croît au-delà d'une température seuil et une tige (42) définissant une direction axiale (D), un déplacement relatif entre le cylindre (41) et la tige (42) le long de la direction axiale (D) pouvant se produire sous l'action du matériau d'expansion, et dans laquelle la tige (42) est en appui à l'une de ses extrémités (421) contre un élément de butée (13), ledit élément de butée (13) étant déplaçable sous l'action de moyens de déplacement (14, 18) en direction du cylindre (41), lesdits moyens de déplacement (14, 18) étant au moins en partie disposés à l'intérieur de la section passante (5), **caractérisée en ce qu'**elle comprend des moyens d'étanchéité (17) aptes à empêcher une circulation de fluide entre la section passante (5) et un compartiment externe (15) logeant en partie les moyens de déplacement (14), lesdits moyens d'étanchéité étant constitués d'un joint torique (17) disposé autour d'un élément de liaison (16) disposé entre la section passante (5) et le compartiment externe (15) et soumis à un mouvement de rotation autour d'un axe parallèle à la direction axiale (D) sous l'action des moyens de déplacement (14).

2. Vanne thermostatique (10) selon la revendication précédente, **caractérisée en ce que** les moyens de déplacement (14, 18) sont aptes à déplacer l'élément de butée (13) le long de la direction axiale (D) définie par la tige (42).

3. Vanne thermostatique (10) selon la revendication précédente, **caractérisée en ce que** l'élément de butée (13) comprend une bague (131) cylindrique creuse possédant au moins une rainure (135) sur son pourtour externe, ladite rainure (135) définissant une partie filetée, et un moyeu central (132) relié à ladite bague (131) au moyen d'ailettes radiales (136), ledit moyeu central (132) étant aligné avec la tige (42) et en contact avec celle-ci, et **en ce que** les moyens de déplacement comprennent un actionneur électrique (14) apte à déplacer en rotation le moyeu central (132) autour d'un axe parallèle à la direction axiale (D) et au moins une saillie (18) en relief formée sur le pourtour interne du corps (1), ladite saillie (18) définissant une partie taraudée dans laquelle vient se visser la partie filetée de la bague (131) de telle sorte que le déplacement en rotation du moyeu central (132) provoque le déplacement en translation le long de la direction axiale (D) de l'élément de butée (13).

4. Vanne thermostatique (10) selon la revendication 2, **caractérisée en ce que** l'élément de butée comprend une bague cylindrique creuse et un moyeu central relié à ladite bague au moyen d'ailettes radiales, ledit moyeu central étant aligné avec la tige et en contact avec celle-ci, et **en ce que** l'élément de butée est monté en glissière dans le corps, de telle sorte qu'il soit bloqué en rotation mais puisse se déplacer selon la direction axiale, ledit élément de butée étant vissé dans un élément de liaison ou, réciproquement, ledit élément de liaison venant se visser dans l'élément de butée, l'élément de liaison pouvant se déplacer en rotation autour d'un axe parallèle à la direction axiale sous l'action d'un actionneur électrique, le déplacement en rotation de l'élément de liaison assurant le déplacement axial de l'élément de butée.

5. Vanne thermostatique (10) selon la revendication 3 ou 4, **caractérisée en ce que** l'élément de butée (13) comprend quatre ailettes radiales (136) espacées angulairement les unes des autres.

6. Vanne thermostatique (10) selon l'une des revendications 3 à 5, **caractérisée en ce qu'**un alésage (134) formé à l'une des extrémités (133) du moyeu central (132) est dimensionné pour recevoir une extrémité (421) de la tige (42) qui dépasse du cylindre (41).

7. Vanne thermostatique (10) selon l'une quelconque des revendications précédentes, **caractérisée en ce que** la température seuil est comprise entre 20 °C et 115 °C.

8. Vanne thermostatique (10) selon l'une quelconque des revendications précédentes, **caractérisée en ce que** le matériau d'expansion est de la cire.

9. Vanne thermostatique selon l'une quelconque des revendications précédentes, **caractérisée en ce que** le moyen de rappel est un ressort de compression (6) exerçant une poussée axiale contre une cage (7) entourant au moins partiellement le cylindre (41) de l'actionneur thermostatique (4) et en appui contre le clapet (8), la cage (7) se déplaçant le long de la direction axiale (D) sous l'action combinée de la poussée exercée par le ressort de compression (6) et de la poussée contraire exercée par le clapet (8) lors de son déplacement.

10. Boîtier (20) d'entrée de fluide ou de sortie de fluide, pour régulation thermostatique d'un circuit de fluide, **caractérisé en ce qu'**il comprend une vanne thermostatique (10) selon l'une quelconque des revendications précédentes.

11. Boîtier (20) selon la revendication précédente, **caractérisé en ce que** le corps (1) de la vanne (10) est fixé sur un bâti (21) du boîtier (20) au moyen d'une liaison du type baïonnette.

## Patentansprüche

1. Thermostatventil (10), das einen Hohlkörper (1), eine erste Öffnung (2) und eine zweite Öffnung (3), die in den Körper (1) führen und durch einen Durchgangsabschnitt (5) hydraulisch verbunden sind, und einen Stopfen, der zumindest teilweise im Durchgangsabschnitt (5) angeordnet ist und einen thermostatischen Aktuator (4) umfasst, ein Vorspannmittel (6), eine Klappe (8), die so ausgelegt ist, dass sie die erste Öffnung (2) öffnet, wenn sie durch den thermostatischen Aktuator (4) betätigt wird, und die erste Öffnung (2) schließt, wenn sie durch das Vorspannmittel (6) vorgespannt wird, wobei der thermostatische Aktuator (4) einen Zylinder (41), der ein Expansionsmaterial enthält, dessen Volumen das einer Schwellentemperatur übersteigt, und eine Stange (42) umfasst, die eine axiale Richtung (D) definiert, wobei unter der Wirkung des Expansionsmaterials eine relative Verschiebung zwischen dem Zylinder (41) und der Stange (42) entlang der axialen Richtung (D) erfolgen kann, und wobei die Stange (42) mit einem ihrer Enden (421) an einem Anschlagelement (13) anliegt, wobei das Anschlagelement (13) unter der Wirkung von Verschiebemitteln (14, 18) in Richtung des Zylinders (41) verschiebbar ist, wobei die Verschiebemittel (14, 18) mindestens teilweise im Inneren des Durchgangsabschnitts (5) angeordnet sind, **dadurch gekennzeichnet, dass** es ein Dichtungsmittel (17) umfasst, das so ausgelegt ist, dass es eine Fluidzirkulation zwischen dem Durchgangsabschnitt (5) und einer äußeren Kammer (15), in der teilweise das Verschiebemittel (14) untergebracht ist, verhindert, wobei das Dichtungsmittel aus einem Dichtungsring (17) besteht, der um das Verbindungselement (16) herum angeordnet ist, das zwischen dem Durchgangsabschnitt (5) und der äußeren Kammer (15) angeordnet ist, und unter der Wirkung des Verschiebemittels (14) einer Drehbewegung um eine zur axialen Richtung (D) parallele Achse unterworfen ist.

2. Thermostatventil (10) nach dem vorhergehenden Anspruch, **dadurch gekennzeichnet, dass** die Verschiebungsmittel (14, 18) so ausgelegt sind, dass sie das Anschlagelement (13) entlang der durch die Stange (42) definierten axialen Richtung (D) verschieben.

3. Thermostatventil (10) nach dem vorhergehenden Anspruch, **dadurch gekennzeichnet, dass** das Anschlagelement (13) einen hohlen zylindrischen Ring (131), der mindestens eine Nut (135) an seinem äußeren Umfang besitzt, wobei die Nut (135) einen Gewindeabschnitt definiert, und eine zentrale Nabe (132) umfasst, die durch radiale Rippen (136) mit dem Ring (131) verbunden ist, wobei die zentrale Nabe (132) mit der Stange (42) ausgerichtet und in Kontakt mit dieser ist, und dadurch, dass die Verschiebungsmittel einen elektrischen Aktuator (14), der so ausgelegt ist, dass er die zentrale Nabe (132) in Drehung um eine Achse parallel zur axialen Richtung (D) verschiebt, und mindestens einen erhabenen Vorsprung (18) umfassen, der an dem inneren Umfang des Körpers (1) ausgebildet ist, wobei der Vorsprung (18) einen Innengewindeabschnitt definiert, in den sich der Außengewindeabschnitt des Rings (131) einschrauben lässt, so dass die Drehverschiebung der zentralen Nabe (132) die translatorische Verschiebung entlang der axialen Richtung (D) des Anschlagelements (13) bewirkt.

4. Thermostatventil (10) nach Anspruch 2, **dadurch gekennzeichnet, dass** das Anschlagelement einen hohlen zylindrischen Ring und eine zentrale Nabe umfasst, die durch radiale Rippen mit dem Ring verbunden ist, wobei die zentrale Nabe mit der Stange ausgerichtet ist und mit dieser in Kontakt steht, und dadurch, dass das Anschlagelement gleitend im Körper montiert ist, so dass es drehfest, aber in axialer Richtung verschiebbar ist, wobei das Anschlagelement in ein Verbindungselement eingeschraubt ist oder umgekehrt das Verbindungselement in das Anschlagelement eingeschraubt ist, wobei das Verbindungselement unter der Wirkung eines elektrischen Aktuators um eine zur axialen Richtung parallele Achse drehend verschiebbar ist, wobei die Drehverschiebung des Verbindungselements für die Axialverschiebung des Anschlagelements sorgt.

5. Thermostatventil (10) nach Anspruch 3 oder 4, **dadurch gekennzeichnet, dass** das Anschlagelement (13) vier radiale Rippen (136) umfasst, die winkelmäßig voneinander beabstandet sind.

6. Thermostatventil (10) nach einem der Ansprüche 3 bis 5, **dadurch gekennzeichnet, dass** eine Bohrung (134), die an einem der Enden (133) der zentralen Nabe (132) ausgebildet ist, so dimensioniert ist, dass sie ein Ende (421) der Stange (42) aufnimmt, das aus dem Zylinder (41) herausragt.

7. Thermostatventil (10) nach einem der vorhergehenden Ansprüche, **dadurch gekennzeichnet, dass** die Schwellentemperatur zwischen 20 °C und 115 °C liegt.

8. Thermostatventil (10) nach einem der vorhergehenden Ansprüche, **dadurch gekennzeichnet, dass** das Expansionsmaterial Wachs ist.

9. Thermostatventil nach einem der vorhergehenden Ansprüche, **dadurch gekennzeichnet, dass** das Vorspannmittel eine Druckfeder (6) ist, die einen axialen Druck auf einen Käfig (7) ausübt, der zumindest teilweise den Zylinder (41) des thermostatischen Aktuators (4) umgibt und an der Klappe (8) anliegt, wobei sich der Käfig (7) unter der kombinierten Wirkung des Drucks, der durch die Druckfeder (6) ausgeübt wird, und des Gegendrucks, der durch die Klappe (8) bei seiner Verschiebung ausgeübt wird, entlang der axialen Richtung (D) verschiebt.

10. Fluideinlass- oder Fluidauslassgehäuse (20) zur thermostatischen Regulierung eines Fluidkreislaufs, **dadurch gekennzeichnet, dass** es ein Thermostatventil (10) nach einem der vorhergehenden Ansprüche umfasst.

11. Fluideinlass- oder Fluidauslassgehäuse (20) nach dem vorhergehenden Anspruch, **dadurch gekennzeichnet, dass** der Körper (1) des Ventils (10) durch eine Bajonettverbindung an einem Rahmen (21) des Gehäuses (20) befestigt ist.

## Claims

1. A thermostatic valve (10) comprising a hollow body (1), a first opening (2) and a second opening (3) emerging into the body (1) and being hydraulically connected by a through section (5), and a shutter arranged at least partially in the through section (5) and comprising a thermostatic actuator (4), a return means (6), a valve (8) capable of opening the first opening (2) when actuated by the thermostatic actuator (4) and closing the first opening (2) when returned by the return means (6), in which the thermostatic actuator (4) comprises a cylinder (41) containing an expansion material whose volume increases beyond a threshold temperature and a rod (42) defining an axial direction (D), a relative displacement between the cylinder (41) and the rod (42) along the axial direction (D) can occur under the action of the expansion material, and in which the rod (42) bears at one of its ends (421) against a stop element (13), said stop element (13) being displaceable under the action of displacement means (14, 18) in the direction of the cylinder (41), said displacement means (14, 18) being at least partly arranged inside the through section (5), **characterized in that** it comprises sealing means (17) capable of preventing a circulation of fluid between the through section (5) and an external compartment (15) partly housing the displacement means (14), said sealing means consisting of an O-ring (17) arranged about a connecting element (16) arranged between the through section (5) and the external compartment (15) and subjected to a rotational movement about an axis parallel to the axial direction (D) under the action of the displacement means (14).

2. The thermostatic valve (10) according to the preceding claim, **characterized in that** the displacement means (14, 18) are capable of displacing the stop element (13) along the axial direction (D) defined by the rod (42).

3. The thermostatic valve (10) according to the preceding claim, **characterized in that** the stop element (13) comprises a hollow cylindrical ring (131) having at least one groove (135) on its external periphery, said groove (135) defining a threaded part, and a central hub (132) connected to said ring (131) by means of radial fins (136), said central hub (132) being aligned with and in contact with the rod (42), and **in that** the displacement means comprise an electric actuator (14) capable of rotatably displacing the central hub (132) about an axis parallel to the axial direction (D) and at least one raised projection (18) formed on the internal periphery of the body (1), said projection (18) defining a tapped part into which the threaded part of the ring (131) is screwed so that the rotational displacement of the central hub (132) causes the displacement in translation along the axial direction (D) of the stop element (13).

4. The thermostatic valve (10) according to claim 2, **characterized in that** the stop element comprises a hollow cylindrical ring and a central hub connected to said ring by means of radial fins, said central hub being aligned with the rod and in contact with it, and **in that** the stop element is slidingly mounted in the body, such that it is blocked in rotation but can be displaced in the axial direction, said stop element being screwed into a connecting element or, conversely, said connecting element is screwed into the stop element, the connecting element being able to be rotatably displaced about an axis parallel to the axial direction under the action of an electric actuator, the rotational displacement of the connecting element ensuring the axial displacement of the stop element.

5. The thermostatic valve (10) according to claim 3 or 4, **characterized in that** the stop element (13) comprises four radial fins (136) spaced angularly from each other.

6. The thermostatic valve (10) according to any of claims 3 to 5, **characterized in that** a bore (134) formed at one of the ends (133) of the central hub (132) is dimensioned to receive an end (421) of the rod (42) which protrudes from the cylinder (41).

7. The thermostatic valve (10) according to any one of the preceding claims, **characterized in that** the threshold temperature is comprised between 20 °C and 115 °C.

8. The thermostatic valve (10) according to any one of the preceding claims, **characterized in that** the expansion material is wax.

9. The thermostatic valve according to any one of the preceding claims, **characterized in that** the return means is a compression spring (6) exerting an axial thrust against a cage (7) at least partially surrounding the cylinder (41) of the thermostatic actuator (4) and bearing against the valve (8), the cage (7) being displaced along the axial direction (D) under the combined action of the thrust exerted by the compression spring (6) and of the opposing thrust exerted by the valve (8) during its displacement.

10. A case (20) for fluid inlet or fluid outlet, for thermostatic regulation of a fluid circuit, **characterized in that** it comprises a thermostatic valve (10) according to any one of the preceding claims.

11. The case (20) according to the preceding claim, **characterized in that** the body (1) of the valve (10) is fixed on a frame (21) of the case (20) by means of a bayonet type connection.
